# EUROPÄISCHE PATENTSCHRIFT

(11) **EP 0 505 727 B1**
(45) Veröffentlichungstag und Bekanntmachung des Hinweises auf die Patenterteilung: **22.03.1995**
(21) Anmeldenummer: 92102815.5
(22) Anmeldetag: 20.02.1992
(51) Int. Cl.: B60K 17/356, B60T 1/06, B60T 1/093

(54) **Antriebseinrichtung für Fahrzeuge**
Drive mechanism for motor vehicles
Transmission pour véhicules automobiles

(30) Priorität: 27.03.1991 DE 4110161
(43) Veröffentlichungstag der Anmeldung: 30.09.1992
(73) Patentinhaber: MAN Nutzfahrzeuge Aktiengesellschaft, 80976 München (DE)
(72) Erfinder: Rühmann, Gerd, Dipl.-Ing. (FH), W-8031 Gilching (DE); Drewitz, Hans, Dipl.-Ing. (FH), W-8000 München 40 (DE)

(56) Entgegenhaltungen:
- EP-A- 0 185 643
- DE-A- 1 901 762
- DE-A- 3 545 481
- DE-C- 1 159 279
- GB-A- 791 903
- US-A- 2 588 866
- US-A- 3 811 525
- US-A- 3 966 365

## Beschreibung

Die Erfindung bezieht sich auf eine Antriebseinrichtung für Fahrzeuge, insbesondere Nutzfahrzeuge, mit einer mechanischen Antriebsverbindung zwischen dem Verbrennungsmotor und den Antriebsrädern der Hauptantriebsachse sowie mit einem zu- und abschaltbaren Zusatzantrieb für die Fahrzeugräder der Zusatzantriebsachse, bei der der Zusatzantrieb als hydrostatischer Einzelradantrieb mit in den Naben der Fahrzeugräder angeordneten Hydromotoren ausgebildet ist und eine vom Verbrennungsmotor antreibbare hydrostatische Pumpe vorgesehen ist, die die Antriebsenergie für die Hydromotoren liefert, wobei die hydrostatische Pumpe wahlweise auf den Antrieb der in den Fahrzeugrädern der Zusatzantriebsachse angeordneten Hydromotoren oder als Retarder auf die Fahrzeugräder der Hauptantriebsachse wirksam setzbar ist.

Herkömmliche Allradnutzfahrzeuge in der 4 x 4 oder 6 x 6-Bauweise sind in der Regel gemäß folgendem Antriebskonzept ausgelegt: Die Drehmomentenübertragung erfolgt vom Motor über ein Schaltgetriebe und eine kurze Gelenkwelle auf ein Verteilergetriebe. Vom Verteilergetriebe verläuft ein Gelenkwellenstrang zur Hinterachse, während über einen zweiten Antriebsflansch und eine Gelenkwelle das Drehmoment auf die starre Vorderantriebsachse übertragen wird. Hierbei kann gemäß einer bekannten Ausführung der Vorderachsantrieb mittels einerdruckluftgeschalteten KLauenkupplung zu- und abgeschaltet werden. Dies ist jedoch nur im Stillstand oder Fast-Stillstand des Fahrzeuges möglich. Dieses Antriebskonzept ist belastet mit einem hohen Eigengewicht des Antriebsstranges und einem dadurch bedingten relativ großen Nutzlastverlust. Weiterhin erfordert die unter dem Verbrennngsmotor angeordnete, vordere Antriebsachse wesentliche Eingriffe in die bestehende Fahrzeugstruktur; aus Gründen der Freigängigkeit müssen Motor und Fahrerhaus angehoben werden. Dieses Antriebskonzept ist einem erheblichen Verschleiß ausgesetzt, da auch im abgeschalteten Zustand des Vorderradantriebes eine erhebliche Anzahl beweglicher Teile weiterhin mitlaufen. Dies führt auch zu einem ungünstigen Gesamtwirkungsgrad des Antriebsstranges.

Hydraulische Antriebe sind seit langem bekannt, vor allem in der Baumaschinenindustrie. Eine bekannte Ausführung im Bereich der Kraftfahrzeuge ist aus der DE-35 45 481 A1 bekannt. Es ist hier eine mit mechanischen Mitteln permanent angetriebene Hinterachse vorgesehen und ein zu- und abschaltbarer Vorderachsantrieb, der aus einzelradaufgehängten, mit Hydromotoren versehenen Rädern besteht, wobei die Hydromotoren von einer am Schaltgetriebe des Motors angebrachten Pumpe angetrieben werden.

Aus der DE-C-11 59 279 ist eine Antriebseinrichtung bekannt, bei der als Pumpe eine vom Schaltgetriebe unabhängige, hydrostatische Schrägscheibenregelpumpe mit regulierbarer Fördermenge und regulierbarem Druck verwendet wird.

Nach der DE-OS 19 01 762 ist ein Fahrzeug bekannt mit mindestens zwei unabhängig angetriebenen Achsen, von denen wenigstens eine, insbesondere die Vorderachse, von einem hydrostatischen Getriebe angetrieben wird, das wenigstens eine Hydropumpe aufweist, wobei die Hydropumpe Retarderfunktion haben kann.

Aus der GB-A-791903 ist eine Antriebseinheit gemäß der eingangs erwähnten Gattung bekannt.

Ausgehend von diesem Stand der Technik, liegt dieser Erfindung die Aufgabe zugrunde, die hydraulische Einrichtung optimal auszunutzen.

Die Aufgabe wird erfindungsgemäß mit den Merkmalen des Anspruchs 1 gelöst.

Der Zusatzantrieb in der hydraulischen Variante ist wesentlich leichter als bekannte mechanische Antriebe. Um sowohl hydrostatische Pumpe wie auch Hydromotoren in vernünftigen Dimensionen zu halten, wird die Zuschaltung der zusätzlichen Zusatzantriebsachse auf eine verhältnismäßig niedrige Geschwindigkeit, z. B. 30 km/h, begrenzt. Dies ist auch konzeptionell sinnvoll, da Traktionshilfen nur da benötigt werden, wo ohnehin mit geringerer Geschwindigkeit gefahren wird, z. B. auf Steigungs- oder bei Geländefahrten. Es ist hierbei möglich, aus der Fahrbewegung heraus den Zusatzantrieb ein- oder auszuschalten. Dies kommt dem praxisgerechten Fahrbetrieb entgegen. Bei Normalfahrt heißt dies: Fahren ohne Zusatzantrieb mit dem günstigsten Antriebswirkungsgrad, bei Auftauchen von Traktionsproblemen wird der Zusatzantrieb zugeschaltet, ohne die Geschwindigkeit des Fahrzeuges auf Faststillstand reduzieren zu müssen. Wenn die Zusatzantriebsachse weggeschaltet wird, entfallen bis auf die Pumpe sämtliche Bewegungen in den Antriebsteilen, inklusive der Motoren, wobei hier eine spezielle Technik der Hersteller vorliegt. Der Wirkungsgrad des Fahrzeuges entspricht nun weitgehend dem Antriebswirkungsgrad eines 4 x 2-Fahrzeuges. Die Weiterentwicklung beim Stand der Technik ist die wahlweise Benutzung der Hydraulikpumpe für den Antrieb der Vorderräder oder alternativ der Einsatz als Retarder auf die Hauptantriebsachse. Es addieren sich also hier die Vorteile einer größeren Geländegängigkeit und Steigungsfähigkeit des Fahrzeuges mit der Möglichkeit einer wirkungsvolleren Abbremsung im Gefälle oder in einer gefährlichen Verkehrssituation, ohne daß zusätzliche Baumittel aufgewendet werden müssen.

Nach einem wesentlichen Merkmal der Erfindung sind als Hydromotoren in den Radnaben Radialkolbenmotoren vorgesehen. Die Radialkolbenmotoren weisen eine gedrungene Bauart auf und sind solcherart also auch räumlich leicht unterzubringen. Ein weiterer entscheidender Vorteil dieser Motorenart ist es, daß sie aus dem Stand heraus gleich ein hohes Drehmoment aufbringen und somit im schwergängigen Gelände besondere Vorteile erzielen.

Die Schrägscheibenregelpumpe ist über ein Vorgelege mit der Kurbelwelle des Verbrennungsmotores verbunden. Das Übersetzungsverhältnis wird so gewählt, daß die maximale Pumpendrehzahl bei maximaler Motordrehzahl erreicht wird. Während des Fahrbetriebes dreht die Pumpe bei allen Geschwindigkeiten synchron zu der nicht sehr stark schwankenden Motordrehzahl.

Die Erfindung wird auch im wesentlichen Maße dadurch bestimmt, daß zwei hydraulische Kraftkreisläufe und ein von der Elektronikeinheit beeinflußter Steuerkreislauf vorgesehen ist. Solcherart ist ein Kreislauf wirksam, wenn das Fahrzeug mit zugeschaltetem Zusatzantrieb arbeiten soll und der andere Kreislauf für die Retarderfunktion auf die Hauptantriebsachse.

In weiterer Ausgestaltung können die Hydromotoren in bekannter Weise so ausgelegt sein, daß sie auf die Hälfte ihres Schluckvolumens umschaltbar sind. Auf diese Weise kann eine gestufte Abstimmung auf andere Fahrbedingungen erfolgen, nämlich ein schnelleres Fahren bei geringerem Drehmomentbedarf.

Nach einem wesentlichen Merkmal der Erfindung ist ein Handhebel mit einem elektrischen Weggeber zum Wirksamsetzen der Pumpe als Retarder für die Hauptantriebsachse vorgesehen, wobei vom Potentiometer des Handhebels über die Elektronikeinheit auf Öffnen des Druckregelventils geschaltet wird. Bei Betrieb im Retarderkreislauf wird dann ständigdas Drosselventil über ein Signal vom Motordrehzahlgeber proportional geöffnet.

Nach einem anderen Merkmal der Erfindung ist bei Retarderbetrieb die Stellscheibe der Pumpe stets annähernd in maximaler Schrägstellung, d.h. auf die größte Fördermenge eingestellt, und es ist bei minimaler Motordrehzahl ein minimaler Querschnitt und bei maximaler Motordrehzahl ein maximaler Querschnitt des Drosselventils eingestellt; die Druck- bzw. Bremsmomenteneinstellung erfolgt in Abhängigkeit von der Anstellung der Pumpenstellscheibe. Solcherart muß die Stellscheibe beim Regelvorgang nur unwesentlich in einem kleinen Bereich verstellt werden.

In weiterer Ausgestaltung der Erfindung ist der Zusatzantrieb auch bei höheren Fahrgeschwindigkeiten wirksam setzbar, indem bei über einen Grenzwert steigender Fahrgeschwindigkeit das Schluckvolumen der Radialkolbenmotoren mittels Kurzschluß von mindestens zwei Arbeitskolben stufenweise reduzierbar ist. Bei geringer Geschwindigkeit haben also die Radmotore ihr volles Schluckvolumen, d.h. 100 %. Mit steigender Geschwindigkeit wird das Schluckvolumen stufenweise reduziert, so entspricht z.B. eine Kurzschlußschaltung von zwei Zylindern einer Reduzierung von 20 %, anschließend Kurzschlußschaltung von vier Zylindern einer Reduzierung um 40%, Kurzschlußschaltung von 6 Zylindern einer Reduzierung von 60 % usw. Die Radialkolbenmotoren haben jeweils 10 Zylinder, so daß bei maximaler Geschwindigkeit gleich Höchstdrehzahl der Motoren das Schluckvolumen der Hydromotore nur noch 20 % beträgt. Die Förderkapazität der Pumpe wird hierbei nicht überschritten. Das Drehmoment der Radmotoren reduziert sich im gleichen Maße wie das Schluckvolumen der Radmotore reduziert wird. Durch entsprechende konstruktive Maßnahmen muß der Hersteller der Radmotoren dafür Sorge tragen, daß bei höheren Geschwindigkeiten die Rollen der Hubkolben nicht von den Kurvenbahnen abheben.

Nach einem anderen Merkmal der Erfindung ist der Zusatzantrieb bei voller Ausschöpfung des Fördervermögens der Pumpe und unzulässig großem Absinken der Motordrehzahl automatisch abschaltbar. Die kritischen Werte werden durch Signale vom Motordrehzahlgeber und vom Fahrgeschwindigkeitsgeber auf die Elektronikeinheit vorgegeben, gleichzeitig schaltet die Elektronikeinheit auf den Retarderkreislauf um. Die Stellscheibe der Pumpe stellt sich senkrecht, während beide 4-Wege-Ventile gesperrt sind. Auf diese Weise wird der gesamte Kreislauf ruhig gestellt. Es sind keine drehenden Teile mehr vorhanden bis auf die Schrägscheibenstellpumpe, die sich aber nunmehr nur im Leerlauf dreht.

Die Erfindung ist in einem Ausführungsbeispielt dargestellt. Es zeigt:

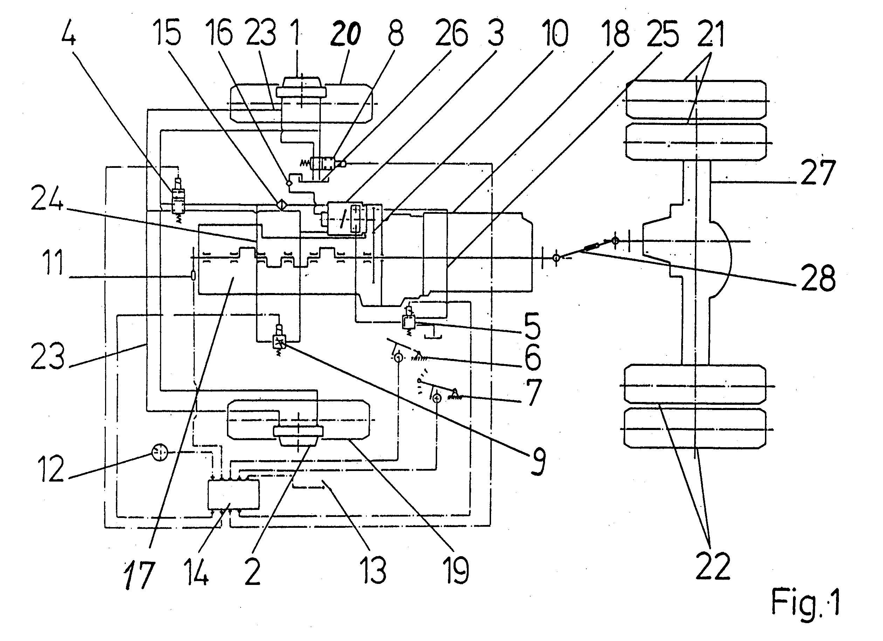

- Fig. 1: ein Schemabild der Antriebseinrichtung mit den entsprechenden hydraulischen Kreisläufen.

Die Fig. 1 zeigt ein Allradfahrzeug, insbesondere Nutzfahrzeug, mit einer Hauptantriebsachse 27 und den dazugehörigen Antriebsrädern 21 und 22. Die Antriebsachse 27 wird in konventioneller Weise von einem Verbrennungsmotor 17 über ein Schaltgetriebe 18 und Gelenkwelle 28 angetrieben. Am Verbrennungsmotor 17 ist eine Schrägscheibenregelpumpe 3 angeflanscht, die als Nebenantrieb vom Motor 17 über das Vorgelege 10 angetrieben wird. Das Übersetzungsverhältnis wird so gewählt, daß die maximale Pumpendrehzahl bei maximaler Motordrehzahl erreicht wird. Während des Fahrbetriebes dreht die Pumpe bei allen Geschwindigkeiten synchron zu der nicht sehr stark schwankenden Motordrehzahl. In einem geschlossenen Kreislauf 23 fördert die Pumpe 3 Öl zu den in der Zusatzantriebsachse gehörigen Einzelrädern 18, 19 integrierten Radialkolbenmotoren 1, 2. In der Schrägscheibenregelpumpe 3 ist eine Speisepumpe integriert; sie saugt über Filter 16 Öl aus dem Ölbehälter 26 und sorgt so für den erforderlichen Ansaugdruck. Die Druckbegrenzung des Systems erfolgt innerhalb der Regelpumpe. Ein erster hydraulischer Kreislauf 23 sorgt für die Beaufschlagung der als Radialkolbenmotoren ausgebildeten, in den Vorderrädern 18 und 19 angeordneten Hydraulikmotoren 1, 2. Über ein 4/2-Wege-Ventil 8 ist der für den Druckaufbau erforderliche geschlossene Kreislauf zu schließen, damit die Radialkolbenmotoren die Räder 18 und 19 antreiben. Wird das Wegeventil offen gestellt, so fließt das Öl drucklos in den Tank 26. Es herrscht nunmehr nur noch Speisepumpendruck im Hydrauliksystem. Die Kolben der Radmotoren heben sich infolge ihrer Konstruktionseigenart von den Kurvenbahnen ab, und es erfolgt somit ein Freikuppeln der Motoren. Auf die hydraulische Steuerung des Freikuppelvorganges wird hier nicht näher eingegangen, da dies bekannter Stand der Technik bei den Motorenherstellern ist. Dem Schaltbild ist ein weiterer hydraulischer Kreislauf 24 zu entnehmen, der dann wirksam gesetzt wird, wenn das 4/2-Wege-Ventil 4 geschlossen wird und die Hydromotoren somit außer Funktion gesetzt werden. Das 4/2-Wege-Ventil 4 hat die Aufgabe, die beiden Funktionen _{"}Fahren mit Allrad" und _{"}Fahren im Retarderbetrieb" zu trennen. Die Schaltung des 4/2-Wege-Ventiles 4 erfolgt mittels eines Ein-Aus-Schalters 13 über die Steuerung einer Elektronikeinheit 14. Dies kann von Hand geschehen aber auch automatisch, wenn die Hydrauikpumpe 3 von ihrer Funktion als Allradantrieb in die Retarderfunktion übergeht. Während der Fahrt mit Zusatzantrieb steht der Betätigungsschalter 13 auf (Ein) und Ventil 4 ist auf Durchgang geschaltet. Das Drosselventil 9 ist hierbei geschlossen und Ventil 8 gesperrt. Der Betätigungshebel für den Retarderbetrieb ist über die Elektronikeinheit 14 ausgeschaltet.

Je nach Stellung des Gaspedals 6 wird über Druckregelventil 5 ein bestimmter Steuerdruck auf das Stellgerät der Hydraulikpumpe 3 abgegeben. Synchron dem Steuerdruck ergibt sich der Versorgungsdruck für die Hydromotoren 1, 2. Die Stellung des Gaspedals 6 bestimmt also über den Versorgungsdruck das Drehmoment an den Hydromotoren. Dies entspricht auch dem Drehmomentenwunsch am Dieselmotor und somit dem Drehmomentenwunsch an den Rädern der Hinterachse. Mit steigender Geschwindigkeit wird das erforderliche Schluckvolumen der Radmotoren, 1, 2 immer größer. Die Stellscheibe der Pumpe 3 muß immer weiter ausschwenken. Damit die Baugröße der Pumpe möglichst klein gehalten werden kann, wird bei größerer Geschwindigkeit gemäß einem Signal von Geschwindigkeitsmesser 12 über die Elektronikeinheit 14 durch einen Schaltvorgang innerhalb der Motoren das Schluckvolumen auf die Hälfte reduziert. Das mögliche Raddrehmoment reduziert sich in diesem Augenblick ebenfalls um die Hälfte. Das Umschalten der Motoren ist bekannter Stand der Technik der Motorenhersteller und soll hier nicht weiter dargestellt und erläutert werden.

Wenn das Fördervermögen der Hydraulikpumpe 3 voll ausgeschöpft ist, z.B. Fahren bei 18 oder 30 km/h, darf die Motorendrehzahl nicht zu weit absinken (nMotor Minimum ca 1000 ¹/min), da sonst Kavitationsgefahr besteht. Im kritischen Ereignisfall schaltet sich der Vorderachsantrieb auf Signale von Motordrehzahlgeber 11 und Geschwindigkeitsmesser 12 ab. Es wird umgeschaltet auf Retarderkreis, das Ventil 8 öffnet zum Ölbehälter 26. Über die Elektronikeinheit 14 schaltet Gaspedal 6 aus und Ventil 5 auf Sperrung, während die Stellscheibe der Pumpe ihre vertikale Stellung einnimmt. Das Potentiometer des Gaspedals 6 wird ausgeschaltet und im Anschluß daran schaltet auch das 4/2-Wege-Ventil 4 auf Sperrung. Die Motoren 1, 2 kuppeln sich nach dem bereits beschriebenen Verfahren frei. Beim manuellen Ausschalten des Vorderradantriebes durch Betätigung von Schalter 13 erfolgt die Abschaltung in gleicher Weise.

Wenn der Vorderradantrieb abgeschaltet ist, steht die Hydraulikpumpe 2 zur Retarderbremsung auf die Hinterachse 27 zur Verfügung. Hierbei wird über die Elektronikeinheit 14 das Drosselventil 9 aktiviert. Über den Drehzahlgeber 11 und die Elektronikeinheit 10 wird das Drosselventil 9 motordrehzahlabhängig gesteuert, d.h. n_{Motormax} ist das Drosselventil auf größte Weite eingestellt, bei n_{Motormin} ist das Drosselventil 9 auf seine engste Stellung eingestellt. Nun wird die Elektronik 14 das Potentiometer des Handhebels 7 eingeschaltet und Druckregelventil 5 aktiviert. Nunmehr besteht die Möglichkeit einer Retarderbremsung. Wenn der Handhebel 7 auf 0 steht, ist das Druckregelventil 5 gesperrt und es liegt kein Druck an der Steuerleitung 25 an. Die Regelscheibe steht dabei senkrecht.. Bei jeder anderen Stellung des Handhebels 7 wird ein entsprechender Druck über das Druckregelventil 5 vor dem Drosselventil 9 erzeugt. Die Stellscheibe der Schrägscheibenregelpumpe 3 stellt sich schräg. Die Pumpe wirkt nunmehr wie ein Retarder und erzeugt über Schaltgetriebe 18 ein bestimmtes Bremsmoment auf die Räder 21 und 22 der Hinterachse 27. Das verstellbare Drosselventil 9 ist dabei so ausgelegt, daß bei maximaler Motordrehzahl eine maximale Drosselweite und bei minimaler Motordrehzahl eine minimale Drosselweite sich einstellt, wobei weiterhin die Stellscheibe der Pumpe in annähernd auf maximale Förderung steht. Die Druckregelung erfolgt hierbei durch minimale Verstellung der Scheibe innerhalb eines kleinen Schwenksenktors. Das Moment am Pumpenantrieb entspricht dem Retardermoment und ist abhängig von dem Winkel der Stellscheibe und vom Förderdruck. Durch die verstellbare Drossel ist bei Retarderbetrieb der Winkel der Pumpenstellscheibe unabhängig von der Motordrehzahl weitgehend konstant. Das Retardermoment ist synchron dem eingestellten Förderdruck. Dabei bewirkt die Stellung des Handhebels 7 auf _{"}klein" eingestellt einen geringen Druck und damit ein geringes Retardermoment, dagegen auf Stellung _{"}max" eingestellt einen großen Pumpendruck entsprechend einem großen Retardermoment. Die jeweilige Drehzahl des Dieselmotors ist hierbei ohne Bedeutung.

Anstatt eines Allradantriebes können in diesem System auch andere hydraulische angetriebene Nebenaggregate betrieben werden. Bei Retarderbremsung kann auch als Grundbremslast weiterhin die bekannte Motorbremse Verwendung finden.

Retarderbremsungen sind auch während des Allradbetriebes (bis ca. 30 km/h) möglich, d.h., zu dem Zeitpunkt, wo der Allradantrieb abgeschaltet wird, kann sogleich die Retarderbremsung beginnen. Dabei würde sich folgender Funktionsablauf ergeben: Das Gaspedal 6 mit seinem Potentiometer ist in Nullstellung. Es erfolgt ein Signal an die Elektronikeinheit 14 _{"}Abschalten des Allradantriebes" und Aktivierung des Retarders, wie es vorstehend in den Details beschrieben worden ist.

Es ist auch ein Allradbetrieb mit höheren Geschwindigkeiten denkbar. Und zwar ist dies in dem vorbeschriebenen System wie folgt möglich: Bei geringer Geschwindigkeit haben die Radmotoren ihr volles Schluckvolumen mit 100 %. Mit steigender Geschwindigkeit wird das Schluckvolumen stufenweise reduziert und zwar in Kurzschlußschaltung von z.B. zwei Motoren. Das entspricht einer Reduzierung um 20 %, 4 Zylinder kurzgeschlossen ergibt eine Reduzierung um 40 %, Kurzschlußschaltung von 6 Zylindern eine Reduzierung von 60 % usw. Die Radmotoren haben jeweils 10 Zylinder, so daß bei maximaler Geschwindigkeit gleich Höchstdrehzahl der Radmotoren 1, 2 das Schluckvolumen der Radmotoren nur noch 20 % beträgt. Die Förderkapazität der Hydraulikpumpe 3 wird dabei nicht überschritten. Das Drehmoment der Radmotoren reduziert sich im gleichen Maße, wie das Schluckvolumen der Radmotoren reduziert wird. Dabei muß der Hersteller der Radmotoren durch entsprechende konstruktive Maßnahmen dafür Sorge tragen, daß bei höheren Geschwindigkeiten die Rollen der Hubkolben nicht von den Kurvenbahnen abheben.

### Bezugszeichenliste

- 1: Radialkolbenmotor
- 2: Radialkolbenmotor
- 3: Schrägscheibenregelpumpe
- 4: 4/2-Wege-Ventil
- 5: Druckregelventil
- 6: Gaspedal mit Potentiometer
- 7: Handhebel mit Potentiometer
- 8: 4/2-Wege-Ventil
- 9: Drosselventil
- 10: Rädervorgelege von
- 11: Motordrehzahlgeber
- 12: Geschwindigkeitsmesser
- 13: Ein-Aus-Schalter für Allradantrieb
- 14: Elektronikeinheit
- 15: Ölkühler
- 16: Ansaugfilter
- 17: Verbrennungsmotor
- 18: Schaltgetriebe
- 19: Fahrzeugrad
- 20: Fahrzeugrad
- 21: Fahrzeugrad
- 22: Fahrzeugrad
- 23: Hydraulischer Kraftkreislauf
- 24: Hydraulischer Kraftkreislauf
- 25: Hydraulischer Steuerkreislauf
- 26: Öltank
- 27: Hauptantriebsachse
- 28: Gelenkwelle

## Patentansprüche

1. Antriebseinrichtung für Fahrzeuge, insbesondere Nutzfahrzeuge, mit einer mechanischen Antriebsverbindung zwischen dem Verbrennungsmotor und den Antriebsrädern der Hauptantriebsachse sowie mit einem zu- und abschaltbaren Zusatzantrieb für die Fahrzeugräder der Zusatzantriebsachse, bei der der Zusatzantrieb als hydrostatischer Einzelradantrieb mit in den Naben der Fahrzeugräder angeordneten Hydromotoren ausgebildet ist und eine vom Verbrennungsmotor antreibbare, hydrostatische Pumpe vorgesehen ist, die die Antriebsenergie für die Hydromotoren liefert, wobei die hydrostatische Pumpe wahlweise auf den Antrieb der in den Fahrzeugrädern der Zusatzantriebsachse angeordneten Hydromotoren oder als Retarder auf die Fahrzeugräder der Hauptantriebsachse wirksam setzbar ist, dadurch gekennzeichnet, daß als hydrostatische Pumpe (3) eine vom Schaltgetriebe (18) unabhängige, an sich bekannte Schrägscheibenregelpumpe mit regulierbarer Fördermenge und regulierbarem Druck vorgesehen ist, daß für den Antrieb der Hydromotoren (1, 2) ein erster mit einem 4/2-Wege-Ventil (8) aufweisender, die Hydromotoren (1, 2) beaufschlagender, hydraulischer Kreislauf (23) vorgesehen ist, und daß für den Retarderbetrieb der Pumpe (3) ein zweiter, ein Drosselventil (9) aufweisender Kreislauf (24) vorgesehen ist, wobei der erste Kreislauf (23) vom zweiten Kreislauf (24) mittels eines zweiten 4/2-Wege-Ventils (4) abkoppelbar ist, ferner daß ein von einer Elektronikeinheit (14) gesteuerter Steuerkreislauf (25) vorgesehen ist.

2. Antriebsachse nach Anspruch 1, dadurch gekennzeichnet, daß als Hydromotoren (1, 2) Radialkolbenmotoren vorgesehen sind.

3. Antriebseinrichtung nach Anspruch 1 oder 2, dadurch gekennzeichnet, daß die Schrägscheibenregelpumpe (3) über ein Vorgelege (10) mit der Kurbelwelle des Verbrennungsmotors (17) verbunden ist.

4. Antriebseinrichtung nach Anspruch 1, dadurch gekennzeichnet, daß in der Schrägscheibenregelpumpe (3) in bekannter Weise eine Speisepumpe integriert ist, die, aus dem Ölbehälter (26) gespeist, an einen ein Druckregelventil (5) aufweisenden Hydrauliksteuerkreislauf (25) angeschlossen ist, wobei über das Druckregelventil (5) der Steuerdruck, vorgegeben aus der Stellung des Gaspedals (6) auf das Stellgerät der Pumpe (3) übertragbar ist und sich dem Steuerdruck proportional der Versorgungsdruck für die Hydromotoren (1, 2) aufbaut.

5. Antriebseinrichtung nach einem oder mehreren der Ansprüche 1 bis 4, dadurch gekennzeichnet, daß bei Erreichen einer bestimmten Fahrgeschwindigkeit die Hydromotoren (1, 2) in bekannter Weise auf die Hälfte ihres Schluckvolumens umschaltbar sind.

6. Antriebseinrichtung nach einem oder mehreren der Ansprüche 1 bis 5, dadurch gekennzeichnet, daß sich bei voller Ausschöpfung des Pumpenfördervermögens und einer Mindestgrenzdrehzahl des Verbrennungsmotor (17) (z.B. 1000 1/min.) der Zusatzantrieb über die 4/2-Wege-Ventile (8, 4), die von dem Signalgeber (12) für die Fahrgeschwindigkeit und von dem Signalgeber (11) für die Motordrehzahl über die Elektronikeinheit (14) ein entsprechendes Signal erhalten, abschaltet und weiterhin das regelbare Drosselventil 9 von Sperrstellung über ein Signal von Motordrehzahlgeber (11) proportional der gerade anstehenden Drehzahl geöffnet wird, wie auch der elektrische Signalgeber des Gaspedales (6) ausgeschaltet wird und darüber Druckregelventil (5) in Sperrstellung schaltet.

7. Antriebseinrichtung nach einem oder mehreren der Ansprüche 1 bis 6, dadurch gekennzeichnet, daß ein Handhebel (7) mit einem elektrischen Weggeber zum Wirksamsetzen der Pumpe (3) als Retarder für die Hauptantriebsachse vorgesehen ist, wobei vom Potentiometer des Handhebels (7) über die Elektronikeinheit (14) auf Öffnen des Druckregelventils (5) geschaltet wird.

8. Antriebseinrichtung nach Anspruch 7, dadurch gekennzeichnet, daß bei Retarderbetrieb die Stellscheibe der Pumpe (3) stets annähernd in maximaler Schrägstellung, das heißt, auf die größte Fördermenge eingestellt ist und bei minimaler Motordrehzahl ein minimaler Querschnitt bei maximaler Motordrehzahl ein maximaler Querschnitt des Drosselventils (9) eingestellt ist und die Druck- bzw. Bremsmomenteneinstellung in Abhängigkeit von der Anstellung der Pumpenstellscheibe erfolgt.

9. Antriebseinrichtung nach einem oder mehreren der Ansprüche 1 bis 8, dadurch gekennzeichnet, daß der Zusatzantrieb auch bei höheren Fahrgeschwindigkeiten wirksam setzbar ist, indem bei über einem Grenzwert steigender Fahrgeschwindigkeit das Schluckvolumen der Radialkolbenmotoren (1, 2) mittels Kurzschluß von mindestens zwei Arbeitskolben stufenweise reduzierbar ist.

10. Antriebseinrichtung nach einem oder mehreren der Ansprüche 1 bis 9, dadurch gekennzeichnet, daß bei voller Ausschöpfung des Fördervermögens der Pumpe (3) und unzulässig großem Absinken der Motordrehzahl, angezeigt durch Signale von Motordrehzahlgeber (11) und Fahrgeschwindigkeits - geber (12) auf die Elektronikeinheit (14), der Zusatzantrieb automatisch abschaltbar ist, wobei die Elektronikeinheit (14) das Druckregelventil (5) auf Sperrung schaltet, die Stellscheibe der Pumpe sich senkrecht stellt und das 4/2-Wege-Ventil (4) gesperrt ist.

## Claims

1. Drive system for vehicles, particularly commercial vehicles, with a mechanical drive connection between the internal combustion engine and the driven wheels on the main driving axle and with an auxiliary drive which can be switched on and off for the vehicle wheels on the auxiliary driving axle, in which the auxiliary drive is provided as a hydrostatic independent wheel drive with hydraulic motors fitted in the hubs of the vehicle wheels, and a hydrostatic pump which can be driven by the internal combustion engine is fitted and provides the driving energy for the hydraulic motors and can be effectively switched either to drive the hydraulic motors housed in the vehicle wheels on the auxiliary driving axle or to work as a retarder on the vehicle wheels on the main driving axle, characterised in that a commonly known swash-plate variable capacity pump which is independent of the manual gearbox (18) and adjustable in respect of delivery quantity and pressure is provided as hydrostatic pump (3), that for driving the hydraulic motors (1, 2) a first hydraulic circuit (23) is provided which is equipped with a 4/2-way valve (8) and supplies the hydraulic motors (1, 2), and that for the retarder operation of the pump (3) a second circuit (24) is provided which is equipped with a throttle valve (9), the first circuit (23) being able to be uncoupled from the second circuit (24) by means of a second 4/2-way valve, and that in addition a control circuit (25) controlled by an electronic unit (14) is provided.

2. Driving axle as under Claim 1, characterised in that radial piston motors are provided as hydraulic motors (1, 2).

3. Drive system as under Claim 1 or 2, characterised in that the swash-plate variable capacity pump (3) is connected to the crankshaft of the internal combustion engine (17) via a power divider (10).

4. Drive system as under Claim 1, characterised in that a feed pump is in the usual way integrated in the swash-plate variable capacity pump (3) and is fed from the oil reservoir (26) and connected to a hydraulic control circuit (25) which is equipped with a pressure control valve (5), the control pressure, given from the position of the accelerator pedal (6), being transferable to the actuator of the pump (3) via the pressure control valve (5) and the supply pressure for the hydraulic motors (1, 2) building itself up in proportion to the control pressure.

5. Drive system as under one or more of the Claims 1 to 4, characterised in that the hydraulic motors (1, 2) can in the commonly known manner be switched to half of their absorption volume when a certain travelling speed is reached.

6. Drive system as under one or several of the Claims 1 to 5, characterised in that, if the pump delivery capacity is fully exploited and a minimum limit speed of the internal combusion engine (17) is given (eg 1,000 rpm), the auxiliary drive switches itself off via the 4/2-way valves (8, 4) which receive via the electronic unit (14) a corresponding signal from the signal transmitter (12) for the vehicle speed and from the signal transmitter (11) for the engine speed and that also the controllable throttle valve 9 is opened from the blocking position via a signal from the engine speed pickup (11) in proportion to the engine speed at the relevant time and that the electrical signal transmitter for the accelerator pedal (6) is switched off and the pressure control valve (5) switches to blocking position.

7. Drive system as under one or several of the Claims 1 to 6, characterised in that a hand lever (7) with an electrical path sensor is provided for putting the pump (3) into operation as retarder for the main driving axle, the potentiometer of the hand lever (7) switching to opening the pressure control valve (5) via the electronic unit (14).

8. Drive system as under Claim 7, characterised in that in retarder operation the adjusting disc of the pump (3) is always approximately in its maximum inclination position, ie it is set for the largest delivery quantity, and that for minimum engine speed a minimum cross-section and for maximum engine speed a maximum cross-section of the throttle valve (9) is set and that the pressure and brake moments are adjusted in dependence of the position of the pump adjusting disc.

9. Drive system as under one or more of the Claims 1 to 8, characterised in that even at higher travelling speeds the auxiliary drive can be effectively put into operation by the absorption volume of the radial piston motor's being able to be reduced in stages by means of a short circuit of at least two working pistons if the travelling speed exceeds a limit value.

10. Drive system as under one or more of the Claims 1 to 9, characterised in that, if the delivery capacity of the pump (3) is fully exploited and the engine speed drops to an inadmissibly low number of revolutions, which is indicated to the electronic unit (14) by signals from the engine speed pickup (11) and travelling speed pickup (12), the auxiliary drive can be automatically switched off, the electronic unit (14) switching the pressure control valve (5) to blocking, the adjusting disc of the pump bringing itself into vertical position and the 4/2-way valve (4) being blocked.

## Revendications

1. Dispositif de transmission pour véhicules, en particulier pour véhicules utilitaires, avec une liaison mécanique d'entraînement entre le moteur à comoustion interne et les roues motrices de l'essieu principal d'entraînement ainsi qu'avec un entraînement embrayable et débrayable additionnel pour les roues du véhicule de l'essieu moteur additionnel, dans lequel l'entraînement additionnel est constitué sous la forme d'un entraînement hydrostatique indépendant avec des moteurs hydrauliques disposés dans les moyeux des roues du véhicule et dans lequel il est prévu une pompe hydrostatique, qui peut être entraînée par le moteur à combustion interne, pompe qui délivre l'énergie d'entraînement pour les moteurs hydrauliques, la pompe hydrostatique pouvant être mise de façon opérationnelle au choix sur l'entraînement des moteurs hydrauliques disposés dans les roues du véhicule de l'essieu d'entraînement additionnel ou comme ralentisseur sur les roues du véhicule de l'essieu principal d'entraînement, dispositif de transmission caractérisé en ce que l'on prévoir comme pompe hydrostatique (3) une pompe de régulation à disque en mutation connue en soi, indépendante de la boîte de vitesses (18) avec un débit de refoulement réglable et une pression réglable, en ce que pour l'entraînement des moteurs hydrauliques (1, 2), on prévoit un premier circuit hydraulique (23) actionnant les moteurs hydrauliques (1, 2) pourvu d'un distributeur à 4/2 voies (8) et en ce que pour le fonctionnement en ralentisseur de la pompe (3), il est prévu un second circuit (24) présentant une soupape d'étranglement (9), le premier circuit (23) pouvant être séparé du second circuit au moyen d'un second distributeur à 4/2 voies (4), en outre en ce qu'il prévu un circuit de commande (25) commandé par une unité électronique (14).

2. Essieu d'entraînement selon la revendication 1, caractérisé en ce que l'on prévoit comme moteurs hydrauliques (12) des moteurs à pistons radiaux.

3. Dispositif de transmission selon la revendication 1 ou 2, caractérisé en ce que la pompe de régulation à disque en mutation (3) est reliée par une boîte de vitesses intermédiaire (10) à l'arbre de vilebrequin du moteur à combustion interne (17).

4. Dispositif de transmission selon la revendication 1, caractérisé en ce que dans la pompe de régulation à disque en mutation (3) est intégrée d'une manière connue une pompe d'alimentation, qui étant alimentée à partir du réservoir d'huile (26), est raccordée à un circuit hydraulique de commande (25) présentant une soupape de réglage de la pression (5), la pression de commande sur la soupape de réglage de la pression (5), prédéfinie à partir de la position de la pédale d'accélérateur (6) pouvant être transmise à l'appareil de réglage de la pompe (3) et la pression d'alimentation pour les moteurs hydrauliques (1, 2) s'établissant proportionnellement à la pression de commande.

5. Dispositif de transmission selon une ou plusieurs des revendications 1 à 4, caractérisé en ce que lorsqu'on atteint une vitesse de marche déterminée les moteurs hydrauliques (1, 2) peuvent être commutés de manière connue sur la moitié de leur volume d'absorption.

6. Dispositif de transmission selon une ou plusieurs des revendications 1 à 5, caractérisé en ce que quand on a complètement épuisé la capacité de refoulement de la pompe et quand le moteur à combustion interne (17) a atteint une vitesse de rotation minimale limite (par exemple 1000 t/min.) on débraye l'entraînement additionnel au moyen des distributeurs à 4/2 voies (8, 4) qui reçoivent un signal correspondant du transmetteur de signaux (12) pour la vitesse de marche et du transmetteur de signaux (11) pour la vitesse de rotation du moteur par l'intermédiaire de l'unité électronique (14) et en outre on ouvre la soupape réglable d'étranglement (9) à partir de la position de fermeture au moyen d'un signal venant du transmetteur de la vitesse de rotation du moteur (11) proportionnellement à la vitesse de rotation qui apparaît justement, de même que le transmetteur électrique de signaux de la pédale d'accélérateur est aussi débranché et en outre la soupape de réglage de la pression (5) est mise en position fermée.

7. Dispositif de transmission selon une ou plusieurs des revendications 1 à 6, caractérisé en ce que l'on prévoit un levier à main (7) avec un détecteur de course électrique pour rendre opérationnelle la pompe (3) comme ralentisseur de l'essieu principal d'entraînement la soupape de réglage de la pression (5) passant sur l'ouverture sous l'action du potentiomètre du levier à main (7) par l'intermédiaire de l'unité électronique (14).

8. Dispositif de transmission selon la revendication 7, caractérisé en ce que lors du fonctionnement en ralentisseur le dispositif de réglage de la pompe (3) est mis en permanence sensiblement en position oblique maximale, c'est-à-dire sur le plus grand débit de refoulement et dans le cas où la vitesse de rotation du moteur est minimale, on établit une section transversale minimale et dans le cas où la vitesse de rotation du moteur est maximale, on établit une section transversale maximale pour la soupape d'étranglement (9) et le réglage de la pression ou du couple de freinage a lieu en fonction de la position du disque de réglage de la pompe.

9. Dispositif d'entraînement selon une ou plusieurs des revendications 1 à 8, caractérisé en ce que l'entraînement additionnel peut être rendu opérationnel même dans le cas de vitesses de marche plus élevées, alors que dans le cas d'une vitesse de marche montant au-dessus d'une valeur limite , on peut réduire le volume d'absorption des moteurs à pistons radiaux (1, 2) par la mise en court-circuit d'au moins deux pistons de travail.

10. Dispositif d'entraînement selon une ou plusieurs des revendications 1 à 9, caractérisé en ce que quand on a complètement épuisé la capacité de refoulement de la pompe (3) et quand la vitesse de rotation du moteur est tombée à un point inacceptable, vitesse qui est indiquée par des signaux du transmetteur (11) de la vitesse de rotation du moteur et du tachymètre (12) de la vitesse de marche à l'unité électronique (14), l'entraînement additionnel est automatiquement débrayé, l'unité électronique (14) mettant la soupape de réglage de la pression (5) sur fermeture, le disque de la pompe se tenant verticalement et le distributeur à 4/2 voies (4) étant fermé.
